(19) Europäisches Patentamt / European Patent Office / Office européen des brevets

(11) **EP 3 991 277 B1**

(12) **FASCICULE DE BREVET EUROPEEN**

(45) Date de publication et mention
de la délivrance du brevet:
**12.11.2025  Bulletin 2025/46**

(21) Numéro de dépôt: **20742345.0**

(22) Date de dépôt: **16.06.2020**

(51) Classification Internationale des Brevets (IPC):
*H02K 5/24* (2006.01)      *H02K 7/14* (2006.01)
*F04D 25/08* (2006.01)      *F04D 29/66* (2006.01)

(52) Classification Coopérative des Brevets (CPC):
**H02K 5/24; H02K 7/14;** F04D 25/08; F04D 29/668;
H02K 2213/03

(86) Numéro de dépôt international:
**PCT/FR2020/051031**

(87) Numéro de publication internationale:
**WO 2020/260794 (30.12.2020 Gazette 2020/53)**

(54) **SUPPORT DE MOTEUR POUR DISPOSITIF DE CHAUFFAGE, DE VENTILATION ET/OU DE CLIMATISATION POUR VÉHICULE AUTOMOBILE**

MOTORUNTERSTÜTZUNG FÜR EIN HEIZ-, BELÜFTUNGS- UND / ODER KLIMAANLAGEGERÄT FÜR KRAFTFAHRZEUGE

MOTOR SUPPORT FOR A HEATING, VENTILATION AND / OR AIR CONDITIONING DEVICE FOR MOTOR VEHICLES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **28.06.2019  FR 1907099**

(43) Date de publication de la demande:
**04.05.2022   Bulletin 2022/18**

(73) Titulaire: **VALEO SYSTEMES THERMIQUES
78320 Le Mesnil Saint-Denis (FR)**

(72) Inventeurs:
 • **DEGORCE-DUMAS, Clara
   78320 Le Mesnil Saint-Denis (FR)**
 • **KWACZEWSKI, Clémence
   78320 Le Mesnil Saint-Denis (FR)**

 • **DE SOUZA, Stéphane
   78320 Le Mesnil Saint-Denis (FR)**
 • **GUILBOT, Vincent
   78320 Le Mesnil Saint-Denis (FR)**
 • **BENNOUNA, Saad
   78320 Le Mesnil Saint-Denis (FR)**

(74) Mandataire: **Valeo Powertrain Systems
Service Propriété Intellectuelle
Immeuble le Delta
14, avenue des Béguines
95892 Cergy Pontoise (FR)**

(56) Documents cités:
**EP-A1- 2 081 280     FR-A1- 2 933 246
FR-A1- 2 957 987**

## Description

### Domaine technique

La présente invention se rapporte au domaine des dispositifs de chauffage, de ventilation et/ou de climatisation pour véhicules automobiles. L'invention concerne plus particulièrement un support de moteur électrique pour un tel dispositif.

### Technique antérieure

Les véhicules automobiles sont couramment équipés d'un dispositif de chauffage, ventilation et/ou climatisation, qui permet de générer un flux d'air. Un tel dispositif permet également de gérer la température et la distribution au sein de l'habitacle des véhicules du flux d'air créé. Un tel dispositif de chauffage, ventilation et/ou climatisation comporte, entre autres, un ventilateur comprenant une roue de ventilateur entraînée en rotation par un moteur électrique. Le moteur électrique est notamment à commutation électronique, piloté par un module d'alimentation.

Un moteur électrique à commutation électronique, ou moteur à courant continu sans balai (connu également sous la dénomination anglaise de « brushless »), comporte un ensemble rotor et stator, chacun de ces composants étant porteur d'éléments électromagnétiques dont l'interaction génère le déplacement du rotor relativement au stator, et plus loin le déplacement de la roue de ventilateur.

Le moteur électrique est assemblé dans le dispositif de chauffage, ventilation et/ou vibration par l'intermédiaire d'un support de moteur qui comprend une bague intérieure configurée pour accueillir le stator du moteur électrique et une bague extérieure apte à être fixée, directement ou indirectement, à un élément de structure du véhicule.

Un élément de découplage est interposé entre la bague intérieure et la bague extérieure. Cet élément de découplage vise à limiter, de préférence à empêcher, la transmission de vibrations et/ou de contraintes générées du fait de la rotation du moteur électrique, depuis la bague intérieure, vers la bague extérieure. On réduit ainsi la transmission des vibrations vers le dispositif de chauffage, ventilation et/ou climatisation, qui pourraient être ressenties par les occupants du véhicule.

L'élément de découplage permet un mouvement relatif important de la bague intérieure par rapport à la bague extérieure, notamment en cas de vibration. Dans ce cas, la répétition des déplacements peut conduire, à long terme, à la rupture de l'élément de découplage. Une difficulté est ainsi d'obtenir un élément de découplage possédant une bonne endurance mécanique et permettant aussi une faible transmission des vibrations. Les documents EP 2 081 280 A1, FR 2 933 246 A1 et FR 2 957 987 A1 divulguent ainsi un support de moteur pour système de ventilation de véhicule automobile.

Le but de la présente invention est de proposer un support de moteur, notamment pour un dispositif de chauffage, ventilation et/ou climatisation d'un véhicule automobile, qui est de réalisation simple et qui ne présente pas au moins certains des inconvénients des supports de l'art antérieur.

### Résumé

À cet effet, l'invention a pour objet un support de moteur, notamment pour groupe moto-ventilateur d'une installation de ventilation pour véhicule, selon la revendication 1 et comprenant :

> deux bagues coaxiales, dont une bague intérieure apte à recevoir un ou plusieurs éléments du moteur et une bague extérieure apte à être fixée sur un boîtier formant élément de structure,
> un moyen de découplage entre les deux bagues coaxiales comprenant une pluralité de plots en matériau élastomère, interposés entre la bague intérieure et la bague extérieure, chaque plot ayant une épaisseur mesurée dans la direction de l'axe commun des deux bagues,
> chaque plot ayant une forme sensiblement en « H », les deux bras du « H » étant écartés d'une distance B, orientée selon la direction radiale des bagues, chaque bras ayant une largeur D mesurée dans la direction radiale, l'âme du « H » ayant une largeur A, mesurée selon la direction tangentielle, dans lequel le rapport A/B est supérieur ou égal à 1,4 et le rapport A/D est supérieur ou égal à 2.

Ainsi, de manière surprenante, les plots ainsi définis permettent de renforcer l'élément de découplage pour éviter que celui-ci se détériore de manière précoce, tout en conservant une fréquence propre relativement faible, permettant de limiter le bruit dans l'habitacle du véhicule dans lequel le support de moteur est intégré.

De préférence, le support de moteur comporte une ou plusieurs des caractéristiques suivantes, prises seules ou en combinaison : l'épaisseur C étant supérieure ou égale à 10 mm, de préférence supérieure ou égale à 14 mm, et/ou inférieure à 20 mm, de préférence inférieure ou égale à 16 mm ; et/ou

- la distance B est supérieure ou égale à 3 mm et/ou inférieure ou égale à 6 mm ;
- la largeur A est supérieure ou égale à 4 mm et/ou inférieure ou égale à 20 mm ;
- la largeur D des bras du « H » est supérieure ou égale à 2 mm et/ou inférieure ou égale à 5 mm ;
- l'âme du « H » présente un trou borgne, de préférence sensiblement au centre de l'âme et s'étendant selon la direction de l'axe commun des deux bagues ;
- chaque plot est affleurant à au moins l'une des deux bagues, dans la direction de l'axe commun des deux bagues ;
- le moyen de découplage comporte une bague en élastomère s'étendant entre les deux bagues, la bague en élastomère étant de préférence venue de matière avec les plots ;
- la bague en élastomère définit une couronne disposée radialement entre l'une parmi la bague intérieure et la bague extérieure, d'une part, et les plots, d'autre part ;
- le matériau élastomère présente une dureté comprise entre 25 et 60 Shore, notamment sensiblement égale à 40 Shore ;
- le support de moteur comprend au moins un élément de limitation du basculement de la bague intérieure par rapport à la bague extérieure, l'élément de limitation du basculement comprenant un doigt qui s'étend en saillie d'une première des deux bagues et est logé dans un logement formé dans la deuxième des deux bagues, deux butées axiales étant formées dans le logement pour limiter le déplacement du doigt dans le logement par rapport à la direction de l'axe commun des deux bagues ;
- le support de moteur comprend deux plots disposés angulairement, symétriquement de part et d'autre de chaque doigt ;
- un moyen pour limiter le déplacement relatif d'une des deux bagues par rapport à l'autre, dans un plan normal à l'axe commun des deux bagues, comprenant au moins une butée radiale fixée à l'une des deux bagues, avec un jeu radial entre la butée et l'autre des deux bagues ;
- la au moins une butée radiale s'étend entre la bague intérieure et la bague extérieure, la au moins une butée radiale présentant de préférence une courbure intérieure complémentaire à la courbure de la bague intérieure et/ou une courbure extérieure complémentaire à la courbure de la bague extérieure ;
- la bague intérieure et/ou la bague extérieure est recouverte de matériau élastomère, au moins en face de la au moins une butée radiale ;
- le support de moteur comprend au moins deux butées radiales opposées par rapport au centre des bagues, de préférence au moins trois butées radiales régulièrement réparties angulairement autour de l'axe commun des deux bagues ;
- le jeu radial est sensiblement d'1 mm ;
- le support de moteur comprend en outre un moyen pour limiter, de préférence empêcher, la rotation relative des bagues autour de l'axe commun des deux bagues.- au moins l'une des butées axiale est saillante dans le logement ;
- du matériau élastomère est disposé entre le doigt et chacune des deux butées axiales et en contact avec le doigt et une des deux butées axiales, le matériau élastomère étant de préférence comprimé entre le doigt et chacune des deux butées axiales, le matériau élastomère ayant de préférence encore un taux de compression supérieur ou égal à 5% et/ou inférieur ou égal à 25%, de préférence encore sensiblement égal à 15% ;
- le support de moteur comprend une même épaisseur d'élastomère entre le doigt et chacune des deux butées ;
- la au moins une butée axiale s'étend selon une direction sensiblement perpendiculaire à la direction d'allongement du doigt ;
- le support de moteur comprend deux butées axiales saillantes dans le logement, disposées de part et d'autre du doigt, les deux butées axiales saillantes étant en regard l'une de l'autre ;
- le matériau élastomère est surmoulé sur deux faces opposées du doigt ;
- le matériau élastomère sur les faces du doigt possède une dureté comprise entre 20 et 45 shore, notamment sensiblement égal à 25 Shore ;
- le matériau élastomère en contact entre le doigt et chacune des deux butées, est venu de matière avec la bague en matériau élastomère ;
- le doigt a une section transversale en « H » ; et
- les deux faces opposées du doigt faisant face aux butées axiales, sont planes.

Selon un autre aspect, il est décrit un ventilateur, en particulier pour installation de ventilation pour véhicule, comportant un moteur électrique, en particulier un moteur électrique sans balai, une roue de ventilateur, entraînée en rotation par le moteur électrique, et un support de moteur tel que décrit ci-avant, dans toutes ses combinaisons, le moteur, en particulier le stator du moteur, étant fixé sur la bague intérieure du support de moteur.

Selon encore un autre aspect, il est décrit un dispositif de chauffage, de ventilation et/ou de climatisation pour un véhicule automobile, comportant un ventilateur telle que décrit ci-avant dans toutes ses combinaisons.

**Brève description des dessins**

D'autres caractéristiques, détails et avantages ressortiront plus clairement à la lecture de la description donnée ci-après à titre indicatif en relation avec les figures suivantes.

La figure 1 est une vue schématique de côté d'un exemple de dispositif de ventilateur pour dispositif de chauffage, de ventilation et/ou de climatisation pour véhicule automobile.

La figure 2 est une vue schématique en perspective d'un ensemble formé par le support de moteur et un boîtier du dispositif de ventilateur de la figure 1.

La figure 3 est une vue schématique en perspective d'un sous-ensemble du support moteur de la figure 2.

La figure 4 est une vue schématique de côté d'un détail du sous-ensemble de la figure 3.

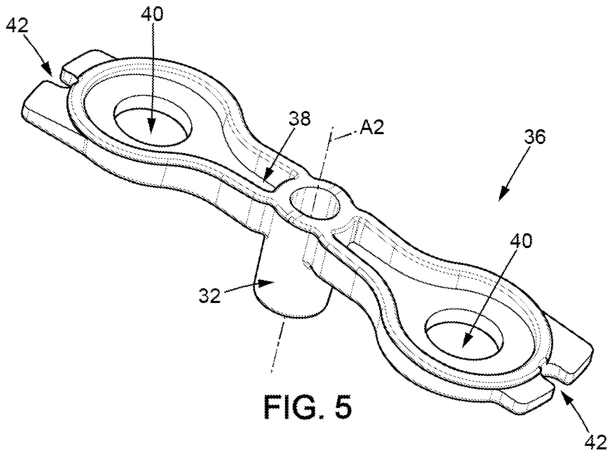

La figure 5 est une vue schématique en perspective d'un pion mis en œuvre dans le support de moteur des figures 2 et 3.

La figure 6 représente un détail du sous-ensemble de la figure 3.

La figure 7 représente schématiquement le détail de la figure 6.

La figure 8 représente un détail d'une première variante du sous-ensemble de la figure 3.

La figure 9 représente schématiquement le détail de la figure 8.

La figure 10 représente un détail d'une deuxième variante du sous-ensemble de la figure 3.

La figure 11 représente schématiquement le détail de la figure 10.

La figure 12 représente un détail d'une troisième variante du sous-ensemble de la figure 3.

La figure 13 représente schématiquement le détail de la figure 12.

**Description détaillée**

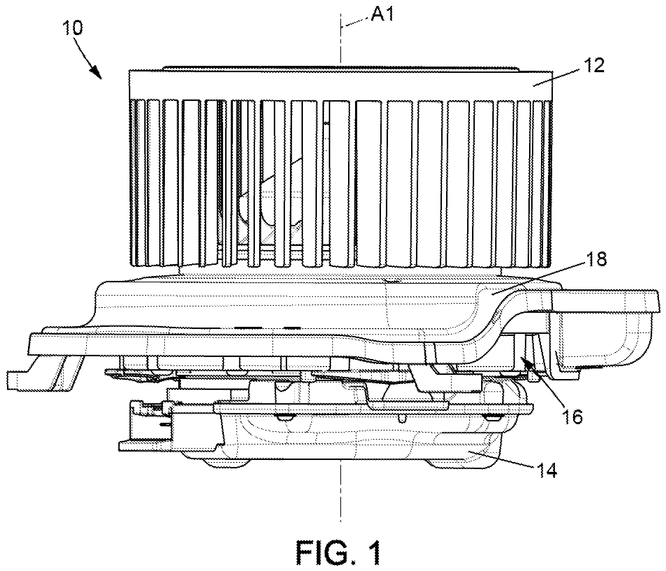

La figure 1 illustre de manière schématique une vue de côté d'un dispositif de ventilateur 10 pour un dispositif de chauffage, de ventilation et/ou de climatisation pour véhicule automobile. Classiquement, un tel dispositif de chauffage, de ventilation et/ou de climatisation pour véhicule automobile comporte, un circuit d'aération, un dispositif de ventilateur 10 pour mettre en mouvement l'air dans le circuit d'aération, et des moyens pour chauffer et/ou des moyens pour rafraîchir le flux d'air mis en mouvement par le dispositif de ventilateur 10.

Comme illustré à la figure 1, le dispositif de ventilateur 10 comporte essentiellement une roue de ventilateur 12 et un moteur électrique, masqué ici par un capot moteur 14, pour entraîner en rotation autour de son axe A1, la roue de ventilateur 12. Le moteur électrique est par exemple un moteur sans balai. Le dispositif de ventilateur 10 comporte encore un support de moteur 16 permettant d'assembler le moteur électrique sur un support. En l'espèce, le moteur électrique est relié à un déflecteur 18 du support de moteur 16, le déflecteur 18 formant une partie du circuit d'aération du dispositif de chauffage, de ventilation et/ou de climatisation.

Dans la suite, on décrit plus en détail le support de moteur 16.

Comme visible sur les figures, le support de moteur 16 comporte essentiellement une bague intérieure 20, une bague extérieure 22 et un élément de découplage 24 interposé entre la bague intérieure 20 et la bague extérieure 22. L'élément de découplage 24 vise à limiter la transmission des vibrations depuis l'une des deux bagues 20, 22 vers l'autre des deux bagues 20, 22. L'élément de découplage 24 est ici formé par une bague en matériau élastomère. À titre d'exemple, le matériau élastomère est du SEBS (polystyrène-b-poly(éthylène-butylène)-b-polystyrène). La bague de découplage 24 est par exemple surmoulée sur les bagues intérieure 20 et extérieure 22. La bague de découplage 24 solidarise ainsi les bagues intérieure 20 et extérieure 22. Les bagues intérieure 20, extérieure 22 et de découplage 24 sont coaxiales, d'axe commun l'axe de rotation A de la roue de ventilateur 12.

L'ensemble formé par les bagues intérieure 20, extérieure 22 et de découplage 24, est reçu dans une cavité du déflecteur 18. La bague intérieure 20 est rendue solidaire du stator (ici non visible) du moteur. La bague extérieure 22 est ici fixée au déflecteur 18. Une couche de matériau élastomère peut être interposée entre la bague extérieure 22 et le déflecteur 18.

Selon l'exemple représenté aux figures, la bague intérieure 20 a une pluralité de doigts 26. Les doigts 26 s'étendent radialement vers l'extérieur, depuis la surface extérieure de la bague intérieure 20. En l'espèce, chaque doigt 26 a une section en H, comprenant deux surfaces sensiblement planes $26_1$, $26_2$ reliées entre elles par une âme $26_3$. Les surfaces planes $26_1$, $26_2$ sont ici normales à la direction de l'axe A1 commun aux bagues 20, 22, 24. Chaque surface plane $26_1$, $26_2$ est ici recouverte d'une couche $27_1$, $27_2$ de matériau élastomère.

Dans l'exemple illustré, la bague intérieure 20 a trois doigts 26. Les doigts 26 sont de préférence régulièrement répartis angulairement autour de l'axe A1 de la bague intérieure 20.

La bague extérieure 22 comprend quant à elle une pluralité de logements 28. Chaque logement 28 est adapté à recevoir un doigt 26 respectif. Les logements 28 sont ainsi débouchant au moins sur la surface radialement interne de la bague extérieure 22. En l'espèce, les logements 28 sont traversant, débouchant sur la surface radialement interne de la bague extérieure 22 et sur la surface radialement externe de la bague extérieure 22. Les logements 28 sont de préférence régulièrement répartis angulairement autour de l'axe A1 de la bague extérieure 22.

La réception des doigts 26 dans les logements 28 permet de limiter le basculement relatif possible de la bague intérieure 20 par rapport à la bague extérieure 22. Par basculement, on entend ici tout mouvement d'une des bagues 20, 22 par rapport à l'autre 20, 22, en dehors du plan médian commun des bagues 20, 22, normal à la direction de l'axe A1 commun aux deux bagues 20, 22.

Dans l'exemple illustré, les logements 28 ont des dimensions telles, qu'un jeu existe entre les parois de chaque logement 28 et le doigt 26 qui y est reçu. Notamment, un jeu existe dans la direction orthoradiale. Les parois de chaque logement 28 sont ici recouvertes de matériau élastomère. De manière préférée, la couche d'élastomère 30 qui recouvre les parois de chaque logement 28 est venue de matière avec la bague de découplage 24.

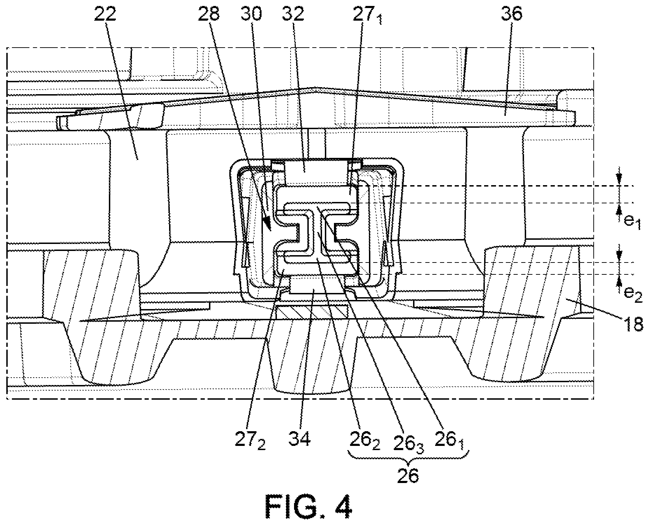

Comme cela est plus particulièrement visible sur la figure 4, dans chaque logement 28, le doigt 26 coopère avec deux butées axiales 32, 34 pour limiter encore le déplacement axial du doigt 26 dans le logement 28. Ici, les deux butées axiales 32, 34 font saillies des parois du logement 28. Par butée axiale, on entend ici une butée limitant le déplacement selon la direction de l'axe A1 commun des bagues 20, 22, 24.

Dans l'exemple illustré, du matériau élastomère de l'une des couches $27_1$, $27_2$ est en contact entre l'une des butées axiales 32, 34 et l'une des surfaces planes $26_1$, $26_2$ du doigt 26. On limite ainsi le débattement possible du doigt 26 dans le logement 28, selon la direction axiale A1. Pour limiter encore ce débattement axial, le matériau élastomère des couches $27_1$, $27_2$ présent entre les butées axiales 32, 34 et les surfaces planes $26_1$, $26_2$ est ici comprimé. Par exemple, le matériau élastomère des couches $27_1$, $27_2$ présent entre les butées axiales 32, 34 et les surfaces planes $26_1$, $26_2$ a un taux de compression, axiale, supérieur ou égal à 5 % et/ou inférieure ou égal à 25 %, de préférence sensiblement égal à 15 %. On définit le taux de compression axiale $\varepsilon_1$, $\varepsilon_2$ comme étant le rapport entre :

- la différence entre l'épaisseur $e_1^0$, $e_2^0$ de la couche d'élastomère sur les surfaces planes $26_1$, $26_2$ des doigts 26 avant la mise en place des doigts 26 entre les butées axiales 32, 34, d'une part, et l'épaisseur $e_1$, $e_2$ de la couche d'élastomère $27_1$, $27_2$ sur les surfaces planes $26_1$, $26_2$ des doigts 26 après la mise en place des doigts 26 entre les butées axiale 32, 34, d'autre part ; et
- l'épaisseur $e_1^0$, $e_2^0$ de la couche d'élastomère sur les surfaces planes $26_1$, $26_2$ des doigts 26 avant la mise en place des doigts 26 entre les butées axiales 32, 34 :

[Math. 1]

$$\varepsilon_1 = \frac{e_1^0 - e_1}{e_1^0},$$

$$\varepsilon_2 = \frac{e_2^0 - e_2}{e_2^0}$$

Ainsi, la déformation possible du matériau élastomère permet de limiter la transmission des vibrations depuis l'une des deux bagues 20, 22 vers l'autre des deux bagues 20, 22. Concomitamment, la compression du matériau élastomère des couches $27_1$, $27_2$ limite cependant le débattement des doigts 26 et, par la même, les mouvements relatifs possibles des deux bagues 20, 22.

Pour ce faire également, le matériau élastomère formant les couches $27_1$, $27_2$, peut être choisi en fonction de sa dureté. Ce matériau élastomère peut notamment avoir une dureté supérieure ou égale à 25 shore et/ou inférieure ou égale à 60 shore.

Les épaisseurs $e_1$, $e_2$, d'une part, et/ou $e_1^0$, $e_2^0$, d'autre part, sont avantageusement sensiblement égales. On permet ainsi un centrage des doigts 26 entre les deux butées axiales 32, 34.

Le matériau élastomère des couches $27_1$, $27_2$ peut avantageusement être surmoulé sur les surfaces $26_1$, $26_2$ des doigts 26, en particulier concomitamment au surmoulage de la bague de découplage 24. Le matériau élastomère est ainsi maintenu en position par rapport aux doigts 26. Le montage de la bague intérieure 20 par rapport à la bague extérieure 22 s'en trouve également facilité.

La première butée axiale est ici formée par un ergot 32 d'un pion 36. Le pion 36 comporte également une base 38, sensiblement plane, depuis laquelle l'ergot 32 s'étend selon un axe A2 destiné à être parallèle à l'axe A1 commun des bagues 20, 22, 24, quand le pion 36 est fixé sur la bague extérieure 22. Pour assurer cette fixation, la base 38 présente ici deux ouvertures 40 destinées à être montées serrées sur deux reliefs cylindriques complémentaires, formés sur la bague extérieure 22. En outre, deux encoches 42 sont prévues aux extrémités longitudinales de la base 38. Une des deux encoches 42 reçoit une nervure complémentaire formée par la bague extérieure 22, pour guider le montage du pion 36 sur la bague extérieure 22. L'ergot 32 est monté serré dans un trou dans la bague extérieure 22, de manière à faire saillie dans un logement 28 et ainsi former la première butée axiale 32. Plus précisément, l'ergot 32 s'étend selon la direction de l'axe A1 commun des bagues 20, 22, 24, depuis l'une des parois du logement 28, vers le doigt 26 qui y est reçu.

La deuxième butée axiale 34 est ici formée par le déflecteur 18 qui comporte des reliefs cylindriques saillants, traversant une ouverture dans la bague extérieure 22, de manière à faire saillie dans les logements 28, depuis une paroi opposée à la première butée axiale 32. Les cylindres saillant s'étendent également selon une direction parallèle à la direction de l'axe A1 commun aux bagues 20, 22, 24.

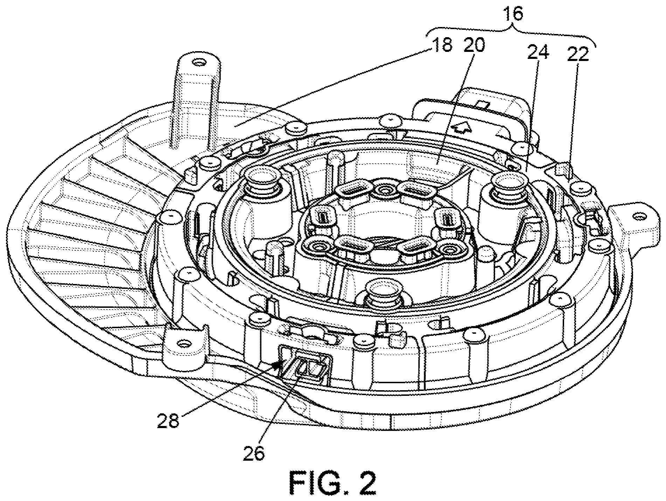

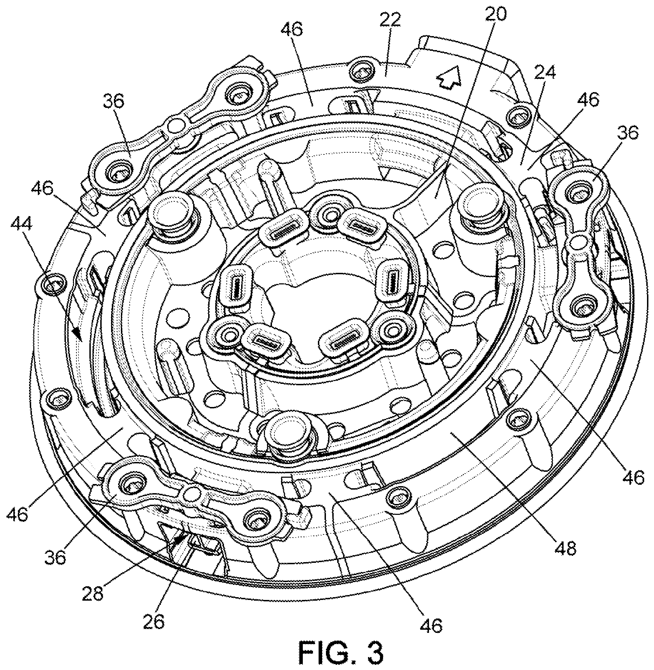

Par ailleurs, comme cela est particulièrement visible sur les figures 2 et 3, la bague de découplage 24 définit une tranchée 44 annulaire entre les bagues intérieure 20 et extérieure 22. Dans cette tranchée 44, la bague de découplage 24 forme des plots 46. Les plots 46 sont ainsi venus de matière avec la bague de découplage 24. En l'espèce, la bague de découplage 24 forme six plots 46. Les six plots 46 forment ici trois paires de plots 46 qui sont sensiblement régulièrement répartis angulairement autour de l'axe A1. Chaque paire de plot 46 comprend par exemple un plot 46 de part et d'autre d'un doigt 26.

Les plots 46 visent essentiellement à renforcer la bague de découplage 24, notamment selon la direction de l'axe A1 commun des bagues 20, 22, pour réduire les risques d'apparition de fissures dans la bague de découplage 24. Cependant, l'ajout de matière correspondant, qui accentue la rigidité de la bague de découplage 24, a tendance à augmenter concomitamment la fréquence de résonance du support moteur 16, notamment de la bague de découplage 24. Cette augmentation de la fréquence de résonance se traduit par une augmentation potentielle du bruit dans l'habitacle du véhicule muni du support moteur 16.

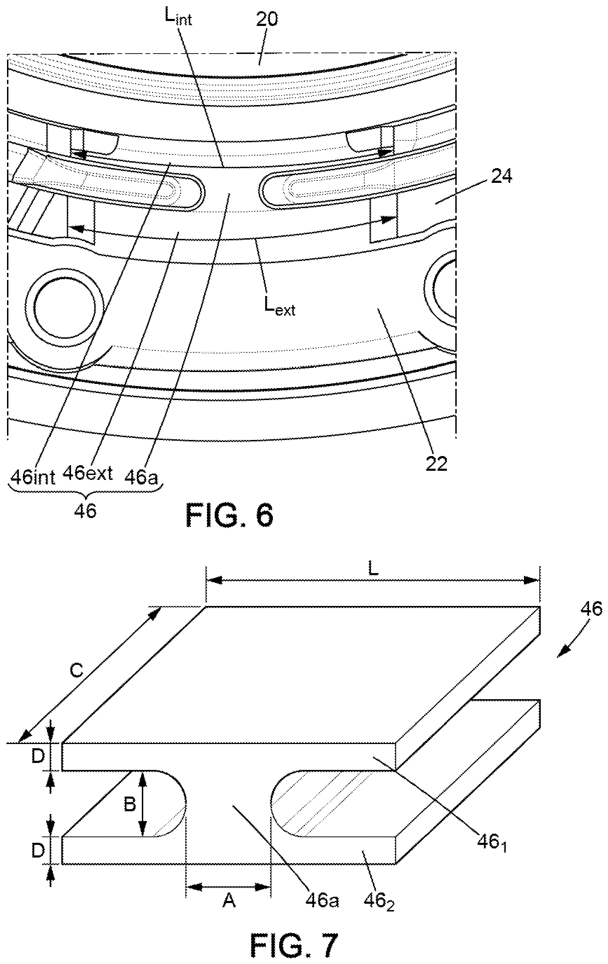

Par conséquent, la forme des plots 46 est choisie de manière à permettre de réellement accentuer la rigidité de la bague de découplage 24, selon la direction de l'axe commun A1 des bagues 22, 24, tout en limitant l'augmentation de la fréquence de résonance du support moteur 16. Pour ce faire, les plots 46 ont sensiblement la forme d'un « H ». En toute rigueur, comme illustré à la figure 6 par exemple, les deux bras 46int, 46ext sont légèrement courbes, la longueur Lint du bras intérieure 46int étant légèrement plus petite que la longueur Lext du bras extérieur 46ext. En pratique cependant, on peut considérer, comme cela est illustré à la figure 7, le plot 46 comme ayant la forme d'un « H » avec deux bras $46_1$, $46_2$ rectilignes, de longueur L égale à la moyenne des longueurs Lint, Lext des bras intérieur 46int et extérieur 46ext.

Les deux bras 46int, 46ext, respectivement $46_1$, $46_2$, du « H » sont écartés d'une distance B, orientée selon la direction radiale des bagues 20, 22, 24. Chaque bras 46int, 46ext, respectivement $46_1$, $46_2$, du « H » a une largeur D mesurée dans la direction radiale. L'âme 46a du « H » a une largeur A, mesurée selon la direction tangentielle. La largeur A de l'âme 46a et la distance B entre les deux bras 46int, 46ext, respectivement $46_1$, $46_2$, du « H » sont telles que le rapport A/B est supérieur ou égal à 1,4. En outre, le rapport A/D est supérieur ou égal à 2. En effet, les inventeurs ont constaté que, de manière surprenante, en respectant ces inégalités, il était possible de renforcer la bague de découplage 24, tout en conservant une fréquence de résonance relativement faible, notamment inférieure à 75 Hz, de préférence inférieure à 50 Hz.

La largeur A de l'âme du « H » 46 peut être supérieure ou égale à 4 mm et/ou inférieure ou égale à 20 mm.

La distance B entre les bras 46int, 46ext, respectivement $46_1$, $46_2$, du « H » 46, peut être supérieure ou égale à 3 mm et/ou inférieure ou égale à 6 mm.

La largeur D des bras 46int, 46ext, respectivement $46_1$, $46_2$ du « H » 46 peut être supérieure ou égale à 2 mm et/ou inférieure ou égale à 5 mm.

Pour améliorer encore la résistance mécanique de l'ensemble, les plots 46 sont avantageusement affleurant à la bague intérieure 20 et/ou à la bague extérieure 22, selon la direction de l'axe A1 commun des deux bagues. Pour ce faire, l'épaisseur C des plots, mesurée selon la direction de l'axe A1 commun des bagues 20, 22, 24, est de préférence supérieure ou égale à 10 mm, de préférence encore supérieure ou égale à 14 mm, et/ou inférieure ou égale à 20 mm, de préférence inférieure ou égale à 16 mm.

Les plots 46 peuvent encore être réalisés en matériau polymère, par exemple du SEBS. Le matériau polymère dans lequel sont formés les plots 46 peut avoir une dureté comprise entre 25 et 60 Shore, notamment sensiblement égale à 40 Shore. L'utilisation d'un matériau sensiblement plus mou permet de limiter encore la fréquence de résonance du support moteur 16.

La bague de découplage 24 forme encore une couronne 48, disposée ici radialement entre la bague intérieure 20 et les plots 46. La couronne 48 recouvre par exemple sensiblement toute la surface radialement externe de la bague intérieure 20.

Dans la suite, on décrit plus en détails, des variantes de la forme des plots 46, en regard des figures 6 à 13.

Dans l'exemple des figures 6 et 7 :

- l'épaisseur C du plot 46 est par exemple comprise entre 10 et 20 mm, notamment sensiblement égale à 14 mm ;
- la largeur A de l'âme est par exemple comprise entre 3 et 6 mm, notamment sensiblement égale à 4,4 mm ;
- la distance B entre les bras 46int, 46ext, respectivement $46_1$, $46_2$, du « H », est par exemple comprise entre 3 mm et 6 mm, notamment sensiblement égale à 3 mm.

Avec de tels plots, il a été possible de réaliser une bague de découplage 24 dont la fréquence propre était sensiblement égale à 32 Hz.

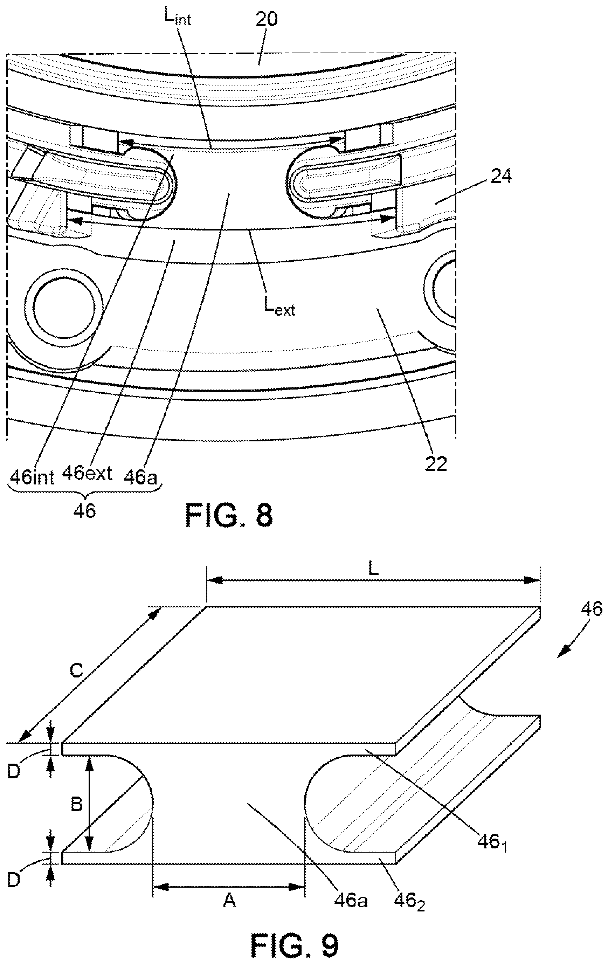

Dans l'exemple des figures 8 et 9 :

- l'épaisseur C du plot 46 est par exemple comprise entre 10 et 20 mm, notamment sensiblement égale à 16 mm ;
- la largeur A de l'âme est par exemple comprise entre 6 et 10 mm, notamment sensiblement égale à 8,8 mm ;
- la distance B entre les bras 46int, 46ext, respectivement $46_1$, $46_2$, du « H », est par exemple comprise entre 3 mm et 6 mm, notamment sensiblement égale à 6 mm.

Avec une telle géométrie de plots 46, il a été possible de réaliser une bague de découplage 24 dont la fréquence propre était sensiblement égale à 32 Hz lorsqu'un matériau de dureté sensiblement égale à 25 shore était employé. Avec la même géométrie et un matériau de dureté sensiblement égale à 40 shore, la fréquence propre est sensiblement égale à 47 Hz.

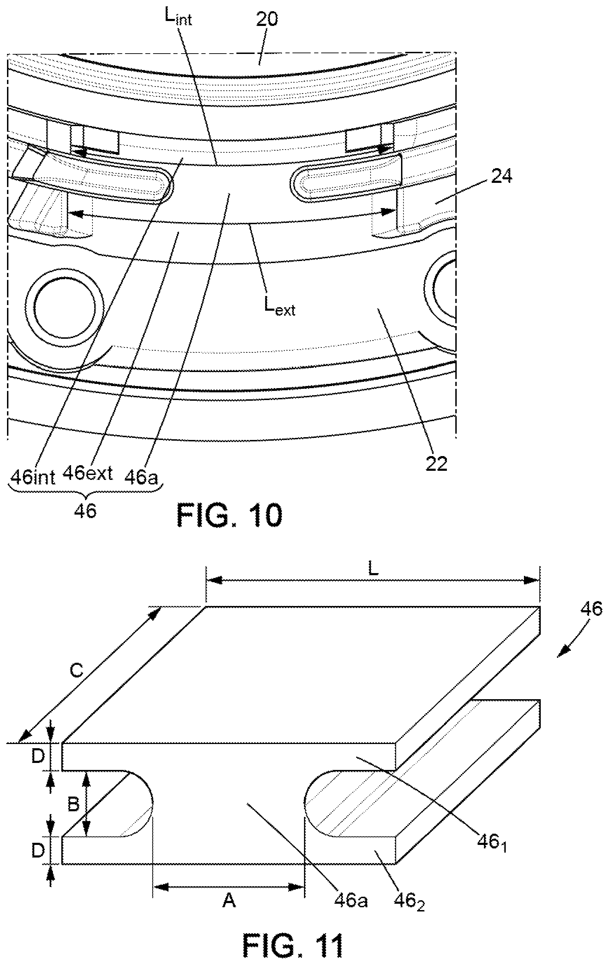

Dans l'exemple des figures 10 et 11 :

- l'épaisseur C du plot 46 est par exemple comprise entre 10 et 20 mm, notamment sensiblement égale à 16 mm ;
- la largeur A de l'âme est par exemple comprise entre 6 et 10 mm, notamment sensiblement égale à 8,8 mm ;
- la distance B entre les bras 46int, 46ext, respectivement $46_1$, $46_2$, du « H », est par exemple comprise entre 3 mm et 6 mm, notamment sensiblement égale à 3 mm.

Avec une telle géométrie de plots 46, il a été possible de réaliser une bague de découplage 24 dont la fréquence propre était sensiblement égale à 45 Hz lorsqu'un matériau de dureté sensiblement égale à 25 shore était employé. Avec la même géométrie et un matériau de dureté sensiblement égale à 40 shore, la fréquence propre est sensiblement égale à 67 Hz.

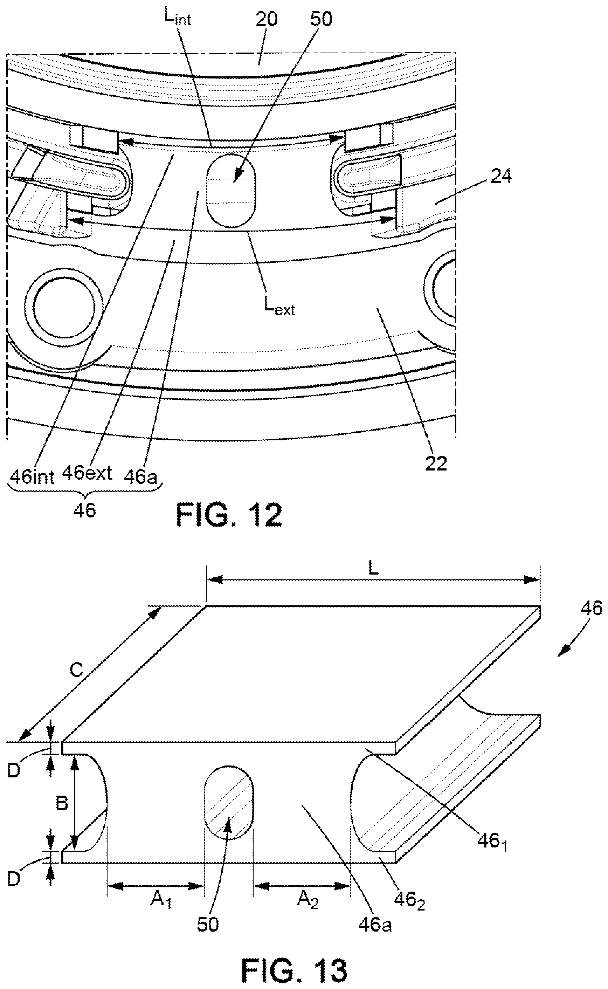

Enfin, dans l'exemple des figures 12 et 13 :

- l'épaisseur C du plot 46 est par exemple comprise entre 10 et 20 mm, notamment sensiblement égale à 16 mm ;
- la largeur A de l'âme est par exemple comprise entre 10 et 20 mm, notamment sensiblement égale à 12 mm ;
- la distance B entre les bras 46int, 46ext, respectivement $46_1$, $46_2$, du « H », est par exemple comprise entre 3 mm et 6 mm, notamment sensiblement égale à 6 mm.

Il est à noter que la largeur A de l'âme 46a correspond ici à la somme des deux longueurs $A_1$, $A_2$ mesurées tangentiellement le long d'un arc médian de l'âme 46a, de part et d'autre d'un trou 50. Ici, les deux longueurs $A_1$, $A_2$ sont sensiblement égale de sorte que le trou 50 est sensiblement au milieu de l'arc médian de l'âme 46a. Le trou 50 est avantageusement borgne, pour ne pas nuire à l'étanchéité du support moteur 16. Le trou 50 facilite notamment le moulage de la bague de découplage 24 et, en particulier, de plots 46 de relativement grandes dimensions. Il est à noter ici que l'âme 46a peut présenter plus d'un trou 50, de préférence borgne. La longueur A de l'âme 46a correspond alors à la somme des longueurs mesurées de part et d'autre des différents trous 50, le long d'un arc médian de l'âme 46a.

Avec une telle géométrie de plots 46, il a été possible de réaliser une bague de découplage 24 dont la fréquence propre était sensiblement égale à 35 Hz lorsqu'un matériau de dureté sensiblement égale à 25 shore était employé. Avec la même géométrie et un matériau de dureté sensiblement égale à 40 shore, la fréquence propre est sensiblement égale à 53 Hz.

La présente divulgation ne se limite pas à l'exemple décrit ci-avant, mais elle englobe toutes les variantes et combinaisons que pourra envisager l'homme de l'art dans le cadre de la protection recherchée.

Selon une première variante de réalisation, une seule butée axiale est saillante dans les logements 28. Dans ce cas, le doigt reçu dans le logement peut être serré entre la butée axiale saillante, d'une part, et la paroi du logement opposée à la butée axiale saillante, d'autre part.

Par ailleurs, les butées axiales peuvent être réalisées par d'autres moyens que ceux décrits dans l'exemple ci-avant. Par exemple l'une et/ou l'autre des butées axiales peut/peuvent être réalisé/s par un bossage de la paroi du logement, s'étendant vers le doigt reçu dans le logement.

Également, dans l'exemple illustré, du matériau élastomère est présent sur les faces des doigts en regard des butées axiales. Alternativement ou au surplus, du matériau élastomère peut être prévu sur les butées axiales, qu'elles soient saillantes ou non. De préférence cependant, on évite un contact entre deux couches de matériau élastomère. Ainsi, seule l'une de deux surfaces en contact est de préférence recouverte de matériau élastomère.

Par ailleurs, dans l'exemple illustré, la bague intérieure forme des doigts reçus dans des logements formés dans la bague extérieure. La configuration inverse est cependant envisageable, selon laquelle la bague extérieure présente des doigts orientés radialement vers la bague intérieure et reçus dans des logements formés dans cette bague intérieure.

Il est également à noter que l'élément de découplage peut prendre d'autre forme que celle d'une bague de découplage.

Les plots peuvent être distincts de la bague de découplage, la bague de découplage et les plots formant alors un moyen de découplage.

## Revendications

1. Support de moteur (16), notamment pour groupe moto-ventilateur d'une installation de ventilation pour véhicule, comprenant :

   deux bagues coaxiales (20 ; 22), dont une bague intérieure (20) apte à recevoir un ou plusieurs éléments du moteur et une bague extérieure (22) apte à être fixée sur un boîtier formant élément de structure,
   un moyen de découplage (24) entre les deux bagues (20 ; 22) coaxiales comprenant une pluralité de plots (46) en matériau élastomère, interposés entre la bague intérieure (20) et la bague extérieure (22), chaque plot (46) ayant une épaisseur C mesurée dans la direction de l'axe (A1) commun des deux bagues (20 ; 22), chaque plot (46) ayant une forme sensiblement en « H », les deux bras ($46int$, $46ext$ ; $46_1$, $46_2$) du « H » étant écartés d'$_{une}$ distance B orientée selon la direction radiale des bagues (20, 22), chaque bras ($46int$, $46ext$ ; $46_1$, $46_2$) ayant une largeur D mesurée dans la direction radiale des bagues (20, 22), l'âme (46a) du « H » ayant une largeur A, mesurée selon la direction tangentielle, **caractérisé en ce que** le rapport A/B est supérieur ou égal à 1,4 et le rapport A/D est supérieur ou égal à 2.

2. Support de moteur selon la revendication 1, dans lequel : l'épaisseur C est supérieure ou égale à 10 mm, de préférence supérieure ou égale à 14 mm, et/ou inférieure à 20 mm, de préférence inférieure ou égale à 16 mm ; et/ou

   - la distance B est supérieure ou égale à 3 mm et/ou inférieure ou égale à 6 mm.

3. Support de moteur selon la revendication 1 ou 2, dans lequel la largeur A est supérieure ou égale à 4 mm et/ou inférieure ou égale à 20 mm.

4. Support de moteur selon l'une des revendications 1 à 3, dans lequel la largeur D des bras ($46int$, $46ext$ ; $46_1$, $46_2$) du « H » est supérieure ou égale à 2 mm et/ou inférieure ou égale à 5 mm.

5. Support de moteur selon l'une quelconque des revendications précédentes, dans lequel l'âme (46a) du « H » présente un trou (50) borgne, de préférence sensiblement au centre de l'âme (46a) et s'étendant selon la direction de l'axe (A1) commun des deux bagues (20 ; 22).

6. Support de moteur selon l'une quelconque des revendications précédentes, dans lequel chaque plot (46) est affleurant à au moins l'une des deux bagues (20 ; 22), dans la direction de l'axe (A1) commun des deux bagues (20 ; 22).

7. Support de moteur selon l'une quelconque des revendications précédentes, dans lequel le moyen de découplage comporte une bague (24) en élastomère s'étendant entre les deux bagues (20 ; 22), la bague en élastomère (24) étant de préférence venue de matière avec les plots (46).

8. Support de moteur selon la revendication 7, dans lequel la bague en élastomère (24) définit une couronne (48) disposée radialement entre l'une parmi la bague intérieure (20) et la bague extérieure (22), d'une part, et les plots (46), d'autre part.

9.  Support de moteur selon l'une quelconque des revendications précédentes, dans lequel le matériau élastomère présente une dureté comprise entre 25 et 60 Shore, notamment sensiblement égale à 40 Shore.

10. Ventilateur (10), en particulier pour installation de ventilation pour véhicule, comportant un moteur électrique, en particulier un moteur électrique sans balai, une roue de ventilateur (12), entrainée en rotation par le moteur électrique, et un support de moteur (16) selon l'une quelconque des revendications précédentes, le moteur, en particulier le stator du moteur, étant fixé sur la bague intérieure (20) du support de moteur (16).


**Patentansprüche**

1.  Motorhalterung (16), insbesondere für eine Motor-Gebläse-Einheit einer Fahrzeugbelüftungsanlage, umfassend:

    • zwei koaxiale Ringe (20; 22), die einen Innenring (20), der ein oder mehrere Motorelemente aufnehmen kann, und einen Außenring (22), der an einem ein Strukturelement bildenden Gehäuse befestigt werden kann, umfassen,
    • eine Entkopplungseinrichtung (24) zwischen den beiden koaxialen Ringen (20; 22), die eine Vielzahl von Zapfen (46) aus einem Elastomermaterial umfasst, die zwischen dem Innenring (20) und dem Außenring (22) angeordnet sind,
    • wobei jeder Zapfen (46) eine Dicke C aufweist, die in Richtung der gemeinsamen Achse (A1) der beiden Ringe (20; 22) gemessen wird, jeder Zapfen (46) eine im Wesentlichen "H"-förmige Gestalt hat, die beiden Arme (46int, 46ext; 461, 462) des "H" durch einen Abstand B getrennt sind, der entlang der radialen Richtung der Ringe (20, 22) ausgerichtet ist, jeder Arm (46int, 46ext; 461, 462) eine Breite D aufweist, die in der radialen Richtung der Ringe (20, 22) gemessen wird, und der Steg (46a) des "H" eine Breite A aufweist, die entlang der tangentialen Richtung gemessen wird,
    • **dadurch gekennzeichnet, dass** das Verhältnis A/B größer oder gleich 1,4 und das Verhältnis A/D größer oder gleich 2 ist.

2.  Motorhalterung nach Anspruch 1, wobei:

    • die Dicke C größer oder gleich 10 mm, vorzugsweise größer oder gleich 14 mm, und/oder kleiner als 20 mm, vorzugsweise kleiner oder gleich 16 mm ist;
    • und/oder
    • der Abstand B größer oder gleich 3 mm und/oder kleiner oder gleich 6 mm ist.

3.  Motorhalterung nach Anspruch 1 oder 2, wobei die Breite A größer oder gleich 4 mm und/oder kleiner oder gleich 20 mm ist.

4.  Motorhalterung nach einem der Ansprüche 1 bis 3, wobei die Breite D der Arme (46int, 46ext; 461, 462) des "H" größer oder gleich 2 mm und/oder kleiner oder gleich 5 mm ist.

5.  Motorhalterung nach einem der vorhergehenden Ansprüche, wobei der Steg (46a) des "H" ein Sackloch (50) aufweist, das sich vorzugsweise im Wesentlichen in der Mitte des Stegs (46a) befindet und sich entlang der Richtung der gemeinsamen Achse (A1) der beiden Ringe (20; 22) erstreckt.

6.  Motorhalterung nach einem der vorhergehenden Ansprüche, wobei jeder Zapfen (46) in Richtung der gemeinsamen Achse (A1) der beiden Ringe (20; 22) mit mindestens einem der beiden Ringe (20; 22) bündig ist.

7.  Motorhalterung nach einem der vorhergehenden Ansprüche, wobei die Entkopplungseinrichtung einen Elastomerring (24) umfasst, der sich zwischen den beiden Ringen (20; 22) erstreckt, wobei der Elastomerring (24) vorzugsweise aus demselben Material wie die Zapfen (46) gefertigt ist.

8.  Motorhalterung nach Anspruch 7, wobei der Elastomerring (24) einen Kranz (48) bildet, der radial zwischen einem von dem Innenring (20) und dem Außenring (22) einerseits und den Zapfen (46) andererseits angeordnet ist.

9. Motorhalterung nach einem der vorhergehenden Ansprüche, wobei das Elastomermaterial eine Härte zwischen 25 und 60 Shore, insbesondere im Wesentlichen gleich 40 Shore, aufweist.

10. Gebläse (10), insbesondere für eine Fahrzeugbelüftungsanlage, umfassend einen Elektromotor, insbesondere einen bürstenlosen Elektromotor, ein von dem Elektromotor in Drehung versetztes Gebläserad (12) und eine Motorhalterung (16) nach einem der vorhergehenden Ansprüche, wobei der Motor, insbesondere der Stator des Motors, am Innenring (20) der Motorhalterung (16) befestigt ist.

**Claims**

1. Motor mount (16), particularly for a motor-fan unit of a vehicle ventilation system, comprising:

   • two coaxial rings (20; 22), including an inner ring (20) capable of receiving one or more motor elements and an outer ring (22) capable of being fixed to a housing forming a structural element,
   • a decoupling means (24) between the two coaxial rings (20; 22) comprising a plurality of studs (46) made of elastomeric material, interposed between the inner ring (20) and the outer ring (22),
   • each stud (46) having a thickness C measured in the direction of the common axis (A1) of the two rings (20; 22), each stud (46) having a substantially "H" shape, the two arms (46int, 46ext; 461, 462) of the "H" being separated by a distance B oriented along the radial direction of the rings (20, 22), each arm (46int, 46ext; 461, 462) having a width D measured in the radial direction of the rings (20, 22), the web (46a) of the "H" having a width A, measured along the tangential direction,
   • **characterized in that** the ratio
   A/B is greater than or equal to 1.4 and the ratio A/D is greater than or equal to 2.

2. Motor mount according to claim 1, wherein:

   • the thickness C being greater than or equal to 10 mm, preferably greater than or equal to 14 mm, and/or less than 20 mm, preferably less than or equal to 16 mm; and/or
   • the distance B is greater than or equal to 3 mm and/or less than or equal to 6 mm.

3. Motor mount according to claim 1 or 2, wherein the width A is greater than or equal to 4 mm and/or less than or equal to 20 mm.

4. Motor mount according to any one of claims 1 to 3, wherein the width D of the arms (46int, 46ext; 461, 462) of the "H" is greater than or equal to 2 mm and/or less than or equal to 5 mm.

5. Motor mount according to any one of the preceding claims, wherein the web (46a) of the "H" has a blind hole (50), preferably substantially in the center of the web (46a) and extending along the direction of the common axis (A1) of the two rings (20; 22).

6. Motor mount according to any one of the preceding claims, wherein each stud (46) is flush with at least one of the two rings (20; 22), in the direction of the common axis (A1) of the two rings (20; 22).

7. Motor mount according to any one of the preceding claims, wherein the decoupling means comprises an elastomeric ring (24) extending between the two rings (20; 22), the elastomeric ring (24) being preferably made of the same material as the studs (46).

8. Motor mount according to claim 7, wherein the elastomeric ring (24) defines a crown (48) arranged radially between one of the inner ring (20) and the outer ring (22) on one hand, and the studs (46) on the other hand.

9. Motor mount according to any one of the preceding claims, wherein the elastomeric material has a hardness between 25 and 60 Shore, in particular substantially equal to 40 Shore.

10. Fan (10), in particular for a vehicle ventilation system, comprising an electric motor, in particular a brushless electric motor, a fan wheel (12) driven in rotation by the electric motor, and a motor mount (16) according to any one of the preceding claims, the motor, in particular the stator of the motor, being fixed on the inner ring (20) of the motor mount (16).

FIG. 1

**FIG. 2**

FIG. 3

**FIG. 4**

**FIG. 5**

FIG. 6

FIG. 7

FIG. 8

FIG. 9

FIG. 10

FIG. 11

FIG. 12

FIG. 13

**EP 3 991 277 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2081280 A1
- FR 2933246 A1
- FR 2957987 A1